# EUROPEAN PATENT APPLICATION

(11) **EP 4 471 588 A1**
(43) Date of publication of application: **04.12.2024**
(21) Application number: 24178461.0
(22) Date of filing: 28.05.2024
(51) Int. Cl.: G06F 9/455, G06F 9/50

(54) **RIGHT-SIZING GRAPHICS PROCESSING UNIT (GPU) PROFILES FOR VIRTUAL MACHINES**

(30) Priority: 30.05.2023 US 202318325756
(71) Applicant: VMware LLC, Palo Alto, CA 94304 (US)
(72) Inventor: Sivaraman, Hari, Palo Alto, 94304 (US); Kurkure, Uday Pundalik, Palo Alto, 94304 (US); Lan, Vu, Palo Alto, 94304 (US)
(74) Representative: Dilg, Haeusler, Schindelmann Patentanwaltsgesellschaft mbH

(57) **Abstract**

Techniques for right-sizing a GPU profile for a VM based on the VM's runtime behavior are provided. In one set of embodiments, these techniques can include collecting data regarding the VM's GPU resource usage and other performance/usage metrics, analyzing the collected data to predict the maximum amount of GPU memory and/or compute resources that the VM will likely require during its runtime, and determining a new, right-sized GPU profile for the VM based on the predicted maximum resource requirements.

## Description

### Background

Unless otherwise indicated, the subject matter described in this section should not be construed as prior art to the claims of the present application and is not admitted as being prior art by inclusion in this section.

Virtual graphics processing unit (GPU) sharing and multi-instance GPU (MIG) are two technologies that allow multiple virtual machines (VMs) to share access to a single physical GPU. Currently, when a VM that uses either of these technologies is created, the VM's creator assigns to the VM a policy, known as a GPU profile, that specifies the amount(s) of GPU resources that should be allocated to (or in other words, reserved for use by) the VM. For example, in the case of virtual GPU sharing, this GPU profile specifies the amount of video framebuffer memory (i.e., video RAM or VRAM) that should be allocated to the VM. In the case of MIG, the GPU profile specifies both the amount of VRAM and the number of GPU processing cores that should be allocated to the VM.

Because the assignment of a GPU profile to a VM is performed statically before the VM is powered on, it is relatively common for the VM's creator to overestimate the VM's GPU requirements and assign a GPU profile that is larger than necessary (i.e., reserves more GPU resources than actually needed by the VM during its runtime). This is undesirable because such reserved but unused GPU resources cannot be accessed by other VMs or GPU consumers and thus are effectively wasted.

### Brief Description of the Drawings

FIG. 1 depicts an example operating environment according to certain embodiments.
FIG. 2A depicts a scenario in which virtual GPU sharing is used to allow multiple VMs to share a GPU.
FIG. 2B depicts a scenario in which MIG is used to allow multiple VMs to share a GPU.
FIG. 3 depicts a flowchart for determining a right-sized GPU profile for a VM according to certain embodiments.
FIG. 4 depicts a flowchart for automatically resizing a VM with a right-sized GPU profile according to certain embodiments.

### Detailed Description

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

Embodiments of the present disclosure are directed to techniques for right-sizing GPU profiles for VMs based on the VMs' runtime behavior. As used herein, the phrase "right-sizing a GPU profile for a VM" refers to the act of determining a GPU profile for the VM that is appropriate for the VM's actual GPU resource needs, or in other words does not reserve significantly more GPU resources than used by the VM during its runtime. Once such a right-sized GPU profile has been determined, it can be provided as a recommendation to the VM's creator (e.g., for use the next time the same or similar VM is provisioned again) or leveraged to automatically "resize" the VM (i.e., restart the VM and its guest GPU workloads with the right-sized GPU profile in place).

### 1. Example Operating Environment and Solution Overview

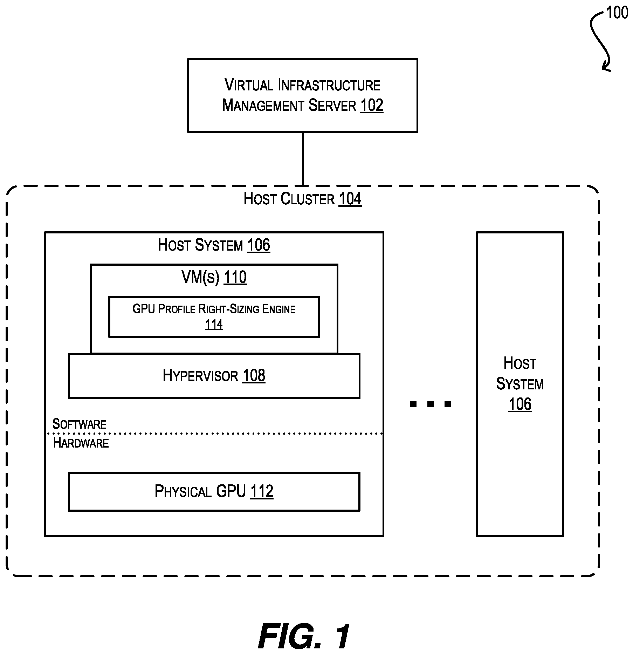

FIG. 1 depicts an example operating environment 100 in which the techniques of the present disclosure may be implemented. As shown, environment 100 is a virtual infrastructure deployment that comprises a virtual infrastructure management (VIM) server 102 communicatively coupled with a host cluster 104. For example, environment 100 may be a cloud deployment of a public cloud provider or an on-premises deployment of an organization/enterprise.

VIM server 102 is a computer system or group of computer systems that is responsible for provisioning, configuring, and monitoring the entities in host cluster 104. In various embodiments, VIM server 104 may run an instance of VMware's vCenter Server or any other similar virtual infrastructure management software.

Host cluster 104 comprises a plurality of host systems 106, each running in software a hypervisor 108 that provides an execution environment for one or more VMs 110. As known in the art, a VM is a virtual representation of a physical computer system with its own virtual CPU(s), storage, GPU(s), etc. Each host system 106 also includes hardware components that are provisioned for use by VMs 110 via hypervisor 108. These hardware components include, among other things, a physical GPU 112. Although not shown in FIG. 1, GPU 112 comprises a set of compute resources (e.g., processing cores, copy engines, hardware encoders/decoders, etc.) and a set of memory resources (e.g., VRAM, caches, memory controllers, etc.). For example, the Nvidia Ampere A100 GPU includes 6192 processing cores and 40 gigabytes (GB) of VRAM.

For the purposes of this disclosure, it is assumed that the GPUs of host cluster 104 support virtual GPU sharing and/or MIG, which are technologies that allow multiple VMs to share use of (or in other words, concurrently run their GPU workloads on) a single physical GPU. With virtual GPU sharing, the GPU's compute resources are multiplexed among the multiple VMs via time slicing while the GPU's VRAM is statically partitioned among those VMs. Accordingly, when a VM runs on a GPU using virtual GPU sharing, it can leverage the full compute capability of the GPU but can only access its assigned VRAM partition. With MIG, both the GPU's compute and memory resources are statically partitioned among the multiple VMs. Accordingly, when a VM runs on a GPU using MIG, the VM can only access the specific GPU processing cores and memory assigned to it.

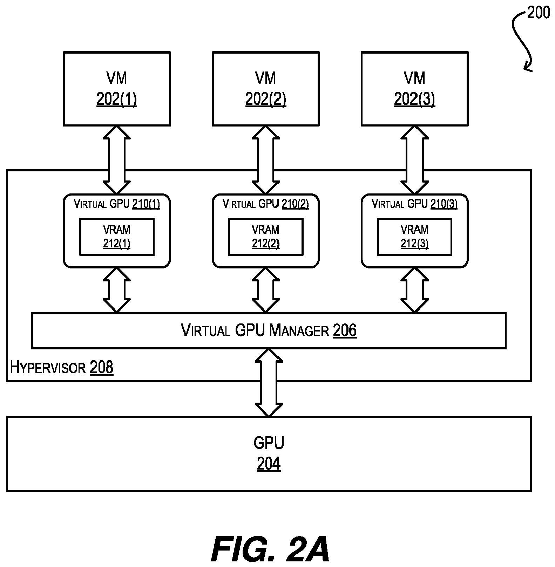

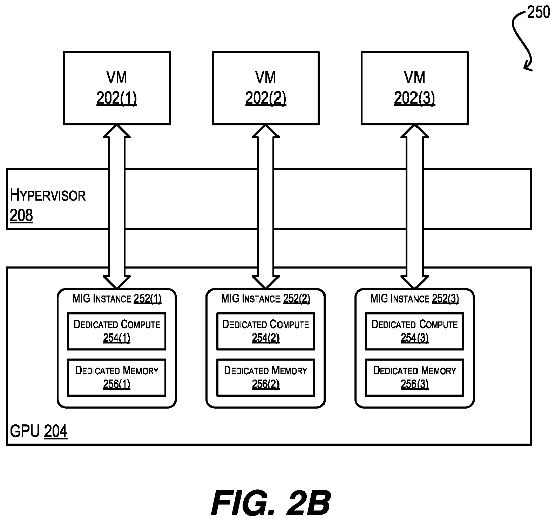

To clarify the foregoing, FIGS. 2A and 2B present scenarios 200 and 250 that illustrate how virtual GPU sharing and MIG work in the context of enabling three VMs 202(1)-(3) to share use of a single GPU 204. As shown in virtual GPU sharing scenario 200, a virtual GPU manager 206 that is part of a hypervisor 208 interfaces with GPU 204 and exposes three virtual GPUs 210(1)-(3) to VMs 202(1)-(3) respectively. Each of these virtual GPUs 210 appears as a physical GPU to its corresponding VM and has a VRAM capacity that maps to a partition of GPU 204's total VRAM. For example, virtual GPU 210(1) has a VRAM capacity 212(1) that maps to some partition of the VRAM of GPU 204, virtual GPU 210(2) has another VRAM capacity 212(2) that maps to another partition of the GPU's VRAM, and virtual GPU 210(3) includes yet another VRAM capacity 212(3) that maps to yet another partition of the GPU's VRAM.

When VMs 202(1)-(3) run their GPU workloads using their respective virtual GPUs 210(1)-(3), virtual GPU manager 206 schedules execution of those workloads on the full compute hardware of GPU 204 using time slicing (such that, e.g., VM 202(1) is allowed to run for x clock cycles, VM 202(2) is allowed to run for the next y clock cycles, and so on). Thus, each VM 202 can use all of the processing cores of GPU 204 during the time slices that it is scheduled for. However, each VM 202 is limited to accessing the specific VRAM partition that is allocated to it via its corresponding virtual GPU, thereby isolating the in-memory data of the VMs from each other.

Turning now to MIG scenario 250 shown in FIG. 2B, GPU 204 is partitioned at the hardware level into three "MIG instances" 252(1)-(3), where each MIG instance represents a separate execution path through GPU 204 and includes a dedicated partition of GPU 204's compute resources (reference numeral 254) and a dedicated partition of GPU 204's memory resources (reference numeral 256). These MIG instances 252(1)-(3) are passed through hypervisor 208 as virtual GPUs to VMs 206(1)-(3) respectively, which allows each VM to run its GPU workloads on its corresponding MIG instance. Note that because MIG does not multiplex VM access to the GPU's full compute capability like virtual GPU sharing, each VM 202 can only utilize the subset of GPU processing cores included in the compute partition of its MIG instance. However, MIG advantageously prevents one VM from impacting the work or scheduling of other VMs and thus ensures that each VM runs with a predictable quality of service on GPU 204 with respect to throughput, latency, and other metrics.

Returning to FIG. 1, at the time of creating a VM in host cluster 104 that is configured to use virtual GPU sharing or MIG (referred to herein as a vGPU/MIG-enabled VM), the creator of the VM will submit a provisioning request to VIM server 102 with a selection of a GPU profile that specifies the amount(s) of GPU resources that should be allocated to the VM, or in other words the maximum GPU resource amount(s) that the creator believes the VM will need during its runtime. In the case of virtual GPU sharing the GPU profile will solely specify a VRAM amount because GPU compute is automatically time sliced under this model, and in the case of MIG the GPU profile will specify both a VRAM amount and a GPU compute amount, typically in terms of "MIG memory slices" and "MIG compute slices." The specific amount of resources included in a given MIG compute slice or memory slice will vary depending on the GPU model to which that slice pertains. For example, the A100 GPU mentioned earlier is composed of seven MIG compute slices (each comprising 1/7 of its 6192 processing cores) and eight MIG memory slices (each comprising 1/8 of its 40GB of VRAM). Thus, a "MIG 2g.10gb" profile for the A100 GPU that includes two MIG compute slices and two MIG memory slices will specify approximately 1769 processing cores and 10GB of VRAM.

Upon receiving the provisioning request and selected GPU profile, VIM server 102 will place the VM on a target GPU in host cluster 104 that has at least the specified amount(s) of GPU resources free/available, which means the VIM server will allocate or reserve the specified resource amount(s) on the target GPU for use by that VM. Once placed in this manner, the VM can be powered on and consume the GPU resources allocated to it on the target GPU over the course of its execution.

As noted in the Background section, one issue with statically assigning a GPU profile to a vGPU/MIG-enabled VM prior to power-on is that, in many cases, the VM's creator will overestimate the amount of GPU resources required by the VM and thus will assign a GPU profile that is over-sized for the VM's needs. This leads to a waste of GPU resources, which is particularly problematic in clusters where there are relatively few GPUs that must be shared by a relatively large number of VMs. In other scenarios, the VM's creator may inadvertently assign a GPU profile that is under-sized, potentially resulting in poor performance of the VM's GPU workloads or outright failure.

To address the foregoing and other similar issues, embodiments of the present disclosure provide a novel GPU profile right-sizing engine, shown via reference numeral 114 in FIG. 1, that can be implemented within each vGPU/MIG-enabled VM of host cluster 104. In various embodiments, GPU profile right-sizing engine (hereinafter simply "right-sizing engine") 114 can be selectively enabled on a per-VM basis and, once enabled for a given VM, can (1) collect data both inside and outside the VM (i.e., at the guest and hypervisor levels) regarding the VM's GPU resource usage and other performance/usage metrics, (2) analyze the collected data to predict the maximum amount of GPU memory and/or compute resources that the VM will likely require during its runtime, and (3) determine a new, right-sized GPU profile for the VM based on the predicted maximum resource requirements. The analysis at (2) can be implemented in several different ways, such as by fitting the data to a theoretical data distribution and identifying the GPU memory and/or compute usage values at the 95th (or higher) percentile, or by providing the data as input to a predictive machine learning (ML) model.

Right-sizing engine 114 can then trigger one or more actions using the right-sized GPU profile. For example, in one set of embodiments right-sizing engine 114 can save the right-sized GPU profile so that it can be presented as a recommendation to the VM's creator. In another set of embodiments, right-sizing engine 114 can automatically resize the VM using the right-sized GPU profile, which involves restarting the VM and its guest GPU workloads (i.e., applications) with the right-sized profile applied. This automatic VM resizing functionality may be enabled or disabled via a user-configured VM-level policy.

The remainder of the present disclosure describes the operation of right-sizing engine 114 in greater detail, including workflows that it may execute for determining a right-sized GPU profile for a VM and for implementing VM resizing. It should be appreciated that FIG. 1 and the foregoing high-level solution description are illustrative and not intended to limit embodiments of the present disclosure. For example, although this description focuses on the right-sizing of GPU profiles under the virtual GPU sharing and MIG models, engine 114 may also be used to right-size GPU profiles pertaining to other similar but not yet developed GPU sharing technologies. Further, although FIG. 1 depicts a particular arrangement of entities within environment 100, other arrangements are possible (e.g., the functionality attributed to a particular entity may be split into multiple entities, entities may be combined, etc.). One of ordinary skill in the art will recognize other variations, modifications, and alternatives.

### 2. GPU Profile Right-Sizing

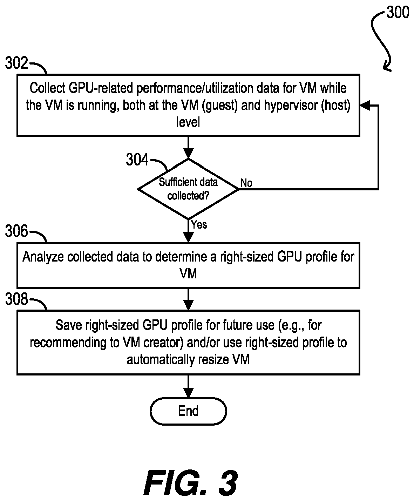

FIG. 3 depicts a flowchart 300 that may be executed by right-sizing engine 114 of FIG. 1 for determining a right-sized GPU profile for a VM in which the engine runs according to certain embodiments. Flowchart 300 assumes that right-sizing engine 114 has been engaged/enabled for the VM via some mechanism, such as a VM-level configuration setting or policy.

Starting with step 302, right-sizing engine 114 can collect GPU-related performance/resource utilization data for the VM while it is running, both at the VM (guest) level and at the hypervisor (host) level. This data collection can be performed on a periodic basis, such as once every x seconds, and can be implemented using existing GPU monitoring tools such as Nvidia-SMI.

Examples of GPU-related data that right-sizing engine 114 may collect at the VM level include the amount of virtual GPU compute and VRAM consumed by the VM's workloads. Examples of GPU-related data that right-sizing engine 114 may collect at the hypervisor level include the amount of host GPU VRAM allocated/reserved for the VM, host GPU usage, and so on. In certain embodiments, right-sizing engine 114 may also collect other types of data that are not specifically GPU-related but may be correlated in some fashion with GPU utilization, such as virtual CPU and virtual memory usage within the VM, host CPU and host memory usage, host network bandwidth usage, and others.

At step 304, after some period of time, right-sizing engine 114 can check whether it has collected an adequate amount of data for its analysis purposes. Right-sizing engine 114 may make this determination based on, for example, whether the VM's GPU utilization metrics have appeared to reach a steady state, which means that the collected data is likely to be representative of the VM's GPU resource needs for its entire runtime. Depending on the nature of the VM and its GPU workloads, this may take a few minutes, a few hours, or longer.

If the answer at step 304 is no, right-sizing engine 114 can loop back to step 302 in order to collect additional data. However, if the answer at step 304 is yes, right-sizing engine 114 can analyze the collected data to determine a right-sized GPU profile for the VM, or in other words a GPU profile that allocates/reserves just enough GPU resources to satisfy the VM's actual runtime needs (step 306). For example, if the collected data indicates that the VM consumes at most 3.75GB of VRAM while running, right-sizing engine 114 may determine that the right-sized GPU profile for the VM is one that allocates/reserves a total of 4GB of VRAM.

As mentioned previously, the analysis performed at step 306 can be implemented using various different techniques. For example, in one set of embodiments, right-sizing engine 114 can fit the collected data points (e.g., GPU compute and memory usage) to a data distribution, such as a gaussian distribution, using an error estimation method like residual sum of squares (RSS). This fitted distribution reflects the likely distribution of GPU resource usage values for the VM over its lifetime. Right-sizing engine 114 can then identify the highest or close-to-highest usage values in the distribution (e.g., those at the 95th percentile or higher) and use those usage values, or slightly larger values, as the GPU resource amounts specified in the right-sized GPU profile.

In another set of embodiments, right-sizing engine 114 can train a predictive ML model on the collected data, such as a deep learning neural network model or a time-series (e.g., long short-term memory or LSTM) model. Right-sizing engine 114 can then provide some portion of the collected data as input to the trained model to predict the maximum amount(s) of GPU resources that the VM will consume and can determine a right-sized GPU profile with resource amounts that are the same as, or slightly larger than, the predicted amounts.

At step 308, upon determining the right-sized GPU profile, right-sizing engine 114 can save the profile for future use, such as for presentation as a recommendation to the VM's creator. With this recommendation in hand, the next time the creator creates the same or similar VM, he/she can assign the right-sized GPU profile to that new VM, thereby ensuring that the GPU resources allocated to it are appropriate for its needs.

Alternatively or in addition, right-sizing engine 114 can use the right-sized GPU profile to automatically resize the VM, depending upon whether the VM has such resizing functionality enabled. This process is detailed in the next section.

### 3. Automatic VM Resizing

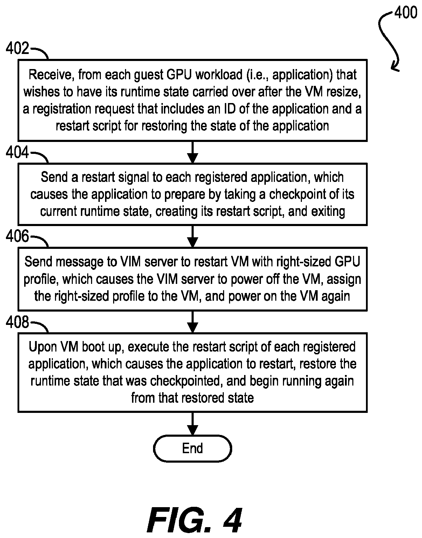

FIG. 4 depicts a flowchart 400 that may be executed by right-sizing engine 114 of FIG. 1 for automatically resizing a VM according to certain embodiments. Flowchart 400 assumes that right-sizing engine 114 has determined a right-sized GPU profile for the VM via flowchart 300 of FIG. 3.

Starting with step 402, right-sizing engine 114 can receive, from each GPU workload (i.e., application) running in the VM that wishes to have its runtime state carried over after the resize is applied, a registration request that includes an identifier of the application and the name of a restart script to run in order to restore the state of the application. This registration request can be received over a well-known port or some other communication channel that is published to the applications.

At step 404, once right-sizing engine 114 is ready to restart (i.e., reboot) the VM in order to apply the new right-sized GPU profile, it can send a restart signal to all applications that submitted a registration request at step 402. This restart signal may be, e.g., an inter-process SIGUSR1 signal. This can cause each receiving application to prepare for the restart event by taking a checkpoint of its current runtime state, creating the restart script identified in its registration request, and then exiting (i.e., terminating its operation).

At step 406, after each application has completed its preparatory steps, right-sizing engine 114 can send a message to VIM server 102 to restart the VM with the right-sized GPU profile. In response, VIM server 102 can power off the VM, assign the right-sized GPU profile to the VM in place of the VM's original GPU profile, and power on the VM again.

Finally, at step 408, right-sizing engine 114 can initialize itself upon VM boot up and can execute the restart script of each registered application, which can cause the application to restart, restore the runtime state that was checkpointed/saved at step 404, and begin running again from that restored state.

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

In addition, while certain virtualization methods referenced herein have generally assumed that virtual machines present interfaces consistent with a particular hardware system, persons of ordinary skill in the art will recognize that the methods referenced can be used in conjunction with virtualizations that do not correspond directly to any particular hardware system. Virtualization systems in accordance with the various embodiments, implemented as hosted embodiments, non-hosted embodiments or as embodiments that tend to blur distinctions between the two, are all envisioned. Furthermore, certain virtualization operations can be wholly or partially implemented in hardware.

Many variations, modifications, additions, and improvements are possible, regardless the degree of virtualization. The virtualization software can therefore include components of a host, console, or guest operating system that performs virtualization functions. Plural instances can be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the present disclosure. In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments, implementations, and equivalents can be employed without departing from the scope hereof as defined by the claims.

## Claims

1. A method comprising:
collecting, by a right-sizing engine running within a virtual machine (VM), data pertaining to usage of a graphics processing unit (GPU) on which the VM is placed;
analyzing, by the right-sizing engine, the collected data to predict a maximum amount of GPU resources that the VM will likely require during its runtime;
determining, by the right-sizing engine, a right-sized GPU profile for the VM based on the predicted maximum amount of GPU resources; and
triggering, by the right-sizing engine, one or more actions using the right-sized GPU profile.

2. The method of claim 1, wherein
the VM shares use of the GPU with other VMs using virtual GPU sharing, and wherein
the analyzing predicts a maximum amount of video RAM that the VM will likely require during its runtime.

3. The method of claim 1 or 2, wherein
the VM shares use of the GPU with other VMs using multi-instance GPU (MIG), and wherein
the analyzing predicts a maximum amount of GPU memory resources and a maximum amount of GPU compute resources that the VM will likely require during its runtime.

4. The method of any one of the claims 1 to 3, wherein the analyzing comprises:
fitting the collected data to a data distribution; and
predicting the maximum amount of GPU resources based on data values located on an upper portion of the data distribution.

5. The method of any one of the claims 1 to 4, wherein the analyzing comprises:
training a machine learning (ML) model on the collected data; and
providing at least a portion of the collected data as input to the trained ML model, resulting in the predicted maximum amount of GPU resources.

6. The method of any one of the claims 1 to 5, wherein
the one or more actions include saving the right-sized GPU profile for presentation to a creator of the VM.

7. The method of any one of the claims 1 to 6, wherein
the one or more actions include automatically resizing the VM by:
powering off the VM;
assigning the right-sized GPU profile to the VM in place of an original GPU profile; and
subsequently to the assigning, restarting the VM and one or more GPU workloads of the VM.

8. A non-transitory computer readable storage medium having stored thereon program code executable by a right-sizing engine running within a virtual machine (VM), the program code causing the right-sizing engine to execute a method as set forth in any one of the preceding claims.

9. A computer system comprising:
a hypervisor;
a virtual machine (VM) running on top of the hypervisor; and
a non-transitory computer readable medium having stored thereon program code that, when executed by a right-sizing engine running within the VM, causes the right-sizing engine to:
collect data pertaining to usage of a graphics processing unit (GPU) on which the VM is placed;
analyze the collected data to predict a maximum amount of GPU resources that the VM will likely require during its runtime;
determine a right-sized GPU profile for the VM based on the predicted maximum amount of GPU resources; and
trigger one or more actions using the right-sized GPU profile.

10. The computer system of claim 9, wherein
the VM shares use of the GPU with other VMs using virtual GPU sharing, and wherein the analyzing causes the right-sizing engine to predict a maximum amount of video RAM that the VM will likely require during its runtime.

11. The computer system of claim 9 or 10, wherein
the VM shares use of the GPU with other VMs using multi-instance GPU (MIG), and wherein the analyzing causes the right-sizing engine to predict a maximum amount of GPU memory resources and a maximum amount of GPU compute resources that the VM will likely require during its runtime.

12. The computer system of any one of the claims 9 to 11, wherein
the program code that causes the right-sizing engine to analyze the collected data comprises program code that causes the right-sizing engine to:
fit the collected data to a data distribution; and
predict the maximum amount of GPU resources based on data values located on an upper portion of the data distribution.

13. The computer system of any one of the claims 9 to 12, wherein
the program code that causes the right-sizing engine to analyze the collected data comprises program code that causes the right-sizing engine to:
train a machine learning (ML) model on the collected data; and
provide at least a portion of the collected data as input to the trained ML model, resulting in the predicted maximum amount of GPU resources.

14. The computer system of any one of the claims 9 to 13, wherein
the one or more actions include saving the right-sized GPU profile for presentation to a creator of the VM.

15. The computer system of any one of the claims 9 to 14, wherein
the one or more actions include automatically resizing the VM by:
powering off the VM;
assigning the right-sized GPU profile to the VM in place of an original GPU profile; and subsequently to the assigning, restarting the VM and one or more GPU workloads of the VM.
